# EUROPÄISCHE PATENTSCHRIFT

(11) **EP 2 019 482 B1**
(45) Veröffentlichungstag und Bekanntmachung des Hinweises auf die Patenterteilung: **31.03.2010**
(21) Anmeldenummer: 07113231.0
(22) Anmeldetag: 26.07.2007
(51) Int. Cl.: H02P 6/18, H02P 21/14

(54) **System zur Lage- und Geschwindigkeitsermittlung bei einem Permanentmagnet-Läufer einer elektrischen Maschine**
System for determining the position and speed for a permanent magnet rotor of an electric machine
Système destiné au calcul de l'emplacement et de la vitesse pour un rotor à aimant permanent d'un moteur électrique

(43) Veröffentlichungstag der Anmeldung: 28.01.2009
(73) Patentinhaber: BAUMÜLLER NÜRNBERG GMBH, D-90482 Nürnberg (DE)
(72) Erfinder: Götz, Fritz Rainer, Dr. Ing., 90522 Oberasbach (DE); Barinberg, Viktor, Dr. Ing., 90491 Nürnberg (DE); Jäger, Franz, 90419 Nürnberg (DE)
(74) Vertreter: Götz, Georg Alois

(56) Entgegenhaltungen:
- JP-A- 2004 015 858
- US-A1- 2005 029 972

## Beschreibung

Die Erfindung betrifft ein Verfahren zur Ermittlung der Antriebs-Geschwindigkeit und -Lage eines Permanentmagnet-Läufers einer elektrischen bürstenlosen Maschine. Dieses Verfahren ist insbesondere zum Einsatz in einen Antriebsregelkreis geeignet. Für das Verfahren werden mehrphasige Strommessungen an der Maschine verwendet, deren Messwerte in Abhängigkeit von der ermittelten Lage in ein rotorbezogenes d,q-Koordinatensystem zu einer Längsstrom-Vektorkomponente und einer Querstrom-Vektorkomponente transformiert werden. Zusammen mit der ermittelten (elektrischen) Drehzahl werden die Längs- und Quervektorkompenten vom Strom und einer vorgegebenen Spannung als Eingangsvariable einem mathematischen Modell von der elektrischen Maschine zugeführt. Das Maschinenmodell generiert eine erste Ausgangsvariable und eine zweite Ausgangsvariable, wobei die erste Ausgangsvariable im d,q-Koordinatensystem der d- bzw. Längsvektorkomponente sowie eines Lageermittlungsfehlers und die zweite Ausgangsvariable im d,q-Koordinatensystem der q- bzw. Querkomponente sowie einem Geschwindigkeitsermittlungsfehler entsprechen. Die beiden Ausgangsvariablen werden einem Nachführregler zu Ermittlung und Ausgabe der Geschwindigkeit, insbesondere elektrischen Drehzahl, und der Lage, insbesondere des elektrischen Winkels zugeführt. Die Erfindung betrifft ferner zur Durchführung dieses Verfahrens geeignete Lage- und/oder Geschwindigkeits-Ermittlungseinrichtung, Maschinen-Modellierungsmodul und Geschwindigkeits-Nachführregler gemäß den jeweiligen ersten Teilen/Oberbegriffen der nebengeordneten, unabhängigen Ansprüche 8, 12 und 15.

Zur Ermittlung der Lage und Geschwindigkeit des Permanentmagnet-Läufers bei einem elektrischen, bürstenlosen Antriebsmotor wird in der AT-Fachzeitschrift "Elektrotechnik und Informationstechnik" Nr. 2/2000 "Geregelte Antriebe", auf Seiten 103-112 von M. Schrödl und E. Robeischl gelehrt, für höhere Drehzahlen (im Bereich über etwa 10 % bis 20 % der Nenndrehzahl) über ein EMK-Modell/Spannungsmodell der Permanentmagnet-Synchronmaschine die beispielsweise für eine Antriebsregelung nötige Lage- und Drehzahlinformation in Echtzeit aus elektrischen Größen zu bestimmen. Die Läuferlageschätzung soll aufgrund der induzierten Spannung in der Statorwicklung durchgeführt werden, was die Stromregelung nicht beeinflusst. Der Grundgedanke dabei ist, die Änderung des Statorfluss-Verkettungsraumzeigers messtechnisch zu bestimmen. Durch Messung des Stromverlaufs wird die Änderung des Permanentmagnetfluss-Raumzeigers aus dem Permanentmagnet-Läufer ermittelt.

US 2005/0 029 972 A1 beschreibt eine vektorielle, feldorientierte Antriebsregelung für einen permanentmagneterregten, bürstenlosen Gleichstrommotor. Die Antriebsregelung umfasst folgendes: einen Winkelfehlerrechner zur Berechnung eines Sinus- und Kosinus-Werts einer Winkeldifferenz zwischen einer geschätzten Winkellage und der tatsächlichen Winkellage. Dies basiert auf einer Phasenspannungsdifferenz mehrerer Phasen am Eingang der Statorwindungen und auf den Phasenströmen einer Mehrzahl von Phasen. Ferner umfasst die Antriebsregelung einen Beobachter zur Berechnung des Lagewinkels auf der Basis des Sinus- und Kosinus-Werts der Winkeldifferenz.

Diese US 2005/0 029 972 A1 offenbart zur Realisierung der soeben genannten, regelungstechnischen Gesichtspunkte ferner eine erste Ausführungsform mit mehreren Abwandlungen und eine zweite Ausführungsform mit mehreren Abwandlungen, die jeweils eine Funktionseinheit zur Berechnung eines Motormodells verwenden. Beim Motormodell der ersten Ausführungsform werden die dynamischen Spannungsabfälle an den Stator-Induktivitäten, welche in der Fachwelt durch so genannte Ldi/dt-Terme berücksichtigt werden, vernachlässigt bzw. weggelassen. Dies mindert allerdings die Genauigkeit. Beim Motormodell der zweiten Ausführungsform sind diese Terme bzw. die entsprechenden zeitlichen Differenzierungen der Ströme explizit enthalten. Neben dem dadurch verursachten, zusätzlichen Rechenaufwand resultiert noch der weitere Nachteil, dass durch die der zeitlichen Ableitungen innewohnende Hochpass-Charakteristik die Störfestigkeit beeinträchtigt bzw. kurzzeitige Störungen sogar verstärkt werden. Allen Ausführungsformen bzw. -varianten ist gemeinsam, dass der Ausgang des Motormodells mit dem Eingang einer so genannten Normalisierungseinheit verbunden ist, welche zur Berechnung eines Näherungswerts für eine Winkeldifferenz ausgebildet ist, und zwar stets über eine Divisions-Rechenoperation im Zusammenhang mit einer Vektorkomponente der induzierten Spannung, wie sie im Motormodell berechnet ist. Derartige Divisions-Rechenoperationen verbrauchen Rechenzeit, sind aufwendig zu implementieren und vermindern die Rechengenauigkeit.

Ein System zur Ermittlung der Antriebs-Lage und/oder Geschwindigkeit bei einer elektrischen, bürstenlosen Maschine, insbesondere Synchronmotor, mit Permanentmagnet-Läufer etwa der anfangs im ersten Absatz genannten Art ist bekannt, vgl. Fachartikel von S. M. Abu-Sharkh, V. Barinberg "A new approach to rotor position estimation for a PM brushless motor drive", Mediterranean Electrotechnical Conf. 1998, Seiten 1199-1203. Danach erfolgt die Läuferlage- und/oder Geschwindigkeitsschätzung ebenfalls nach dem EMK- /Spannungsmodell der elektrischen Maschine. Die dafür an sich notwendige, in der Praxis aber problematische Differenziation/zeitliche Ableitung von Stromsignalen wird durch die Verwendung parameterabhängiger Tiefpassfilter vermieden, deren zeitverzögernde Wirkung von einem nachgeordneten Proportional- und Integral-Nachführregler (PI-Nachführregler) kompensiert wird. Die Zeitkonstante der Tiefpass-Filter entspricht der Stator-Zeitkonstante der elektrischen Maschine. Mit den Tiefpassfiltern werden die Lage- und Geschwindigkeitsermittlungsfehler gewichtet.

Der Erfindung liegt die Aufgabe zugrunde, dem gegenüber das Antriebs-Lage- und Antriebs-Geschwindigkeits-Ermittlungssystem in seinem strukturellen Aufbau zu vereinfachen. Zur Lösung wird auf das im Anspruch 1 angegebene Ermittlungsverfahren, auf die im Anspruch 8 angegebene Ermittlungseinrichtung, auf das im Anspruch 12 angegebene Maschinen-Modellierungsmodul sowie auf den im Anspruch 15 angegebenen Nachführregler verwiesen. Optionale, vorteilhafte Weiterbildungen der Erfindung ergeben sich aus den abhängigen Ansprüchen.

Zwar arbeitet gemäß dem erfindungsgemäßen Verfahren das Maschinenmodell noch mit der Ausgabe einer dritten Abweichungsvariablen an den Nachführregler; jedoch wird dabei die dritte Ausgangsvariable über einfach zu realisierende Rechenschritte erzeugt, die lediglich Gewichtungen durch Proportionalglieder mit Induktivitäts-Festwerten und Summierungen/Differenzbildungen umfassen und mithin mit rechentechnisch einfachen und schnell ablaufenden Funktionskomponenten wie P-Glieder und Summierstellen zu realisieren sind. Mithin lässt sich mit dem erfindungsgemäßen Verfahren der Vorteil einer Effizienzsteigerung erzielen, zumal weder eine zeitliche Differenzierung von Strömen noch zusätzliche phasenverbrauchende Filter wie z. B. die oben beim Stand der Technik verwendeten Tiefpass-Filter notwendig sind.

Zweckmäßig werden im Rahmen des Maschinenmodells die beiden Wichtungsergebnisse (Strom-Längskomponente gewichtet mit Längsinduktivität und Strom-Querkomponente gewichtet mit Querinduktivität) entsprechend einer maschinenspezifischen EMK-Konstante oder einer Zeitkonstante modifiziert. Mit besonderem Vorteil wird dann im Nachführregler eine Integration mit den genannten Konstanten als Integrationsparameter über eine Differenz durchgeführt, die zwischen dem Lage- und dem Geschwindigkeitsermittlungsfehler ("Lageabweichung" beziehungsweise "Geschwindigkeitsabweichung") bzw. den entsprechenden Längs- und Querkomponenten der Spannungsabweichung gebildet ist.

In weiterer Ausgestaltung der Erfindung wird die dem Nachführregler zugeführte dritte Ausgangsvariable mit einem Integrationsergebnis über eine Differenz summiert oder sonst wie verknüpft, welche Differenz aus dem Unterschied zwischen des Lageermittlungsfehlers und des Geschwindigkeitsermittlungsfehlers gebildet wird. Gegebenenfalls ist der Lageermittlungsfehler vorher noch proportional verstärkt worden. Das Verknüpfungsergebnis kann dann aus dem Nachführregler als ermittelte Geschwindigkeit ausgegeben werden. Es wird der Vorteil einer Vereinfachung der Struktur des Nachführreglers erzielt, indem gegenüber reinen Integriergliedern komplexere Proportional- und Integralglieder vermieden sind.

Da gemäß einer Erfindungsvariante bei der Zuführung der dritten Ausgangsvariablen in den Nachführregler sowohl das dortige Proportionalglied (interpretierbar als "Lageregler") als auch ein reines erstes Integrationsglied ohne Proportionalanteil (interpretierbar als "Geschwindigkeitsregler") über eine diesen nachgeordnete Summierstelle übersprungen werden, ist es zweckmäßig, die (übersprungene) Proportionalverstärkung bereits im Maschinenmodell bei der Bildung der dritten Ausgangsvariablen zur Auswirkung zu bringen. Dies lässt sich realisieren, indem die Strom-Längsvektorkomponente nach Einführung in das Maschinenmodell darin mit dieser Proportionalverstärkung bzw. -faktor gewichtet wird.

Weitere Einzelheiten, Merkmale, Merkmalskombinationen, Vorteile und Wirkungen auf der Basis der Erfindung ergeben sich aus der nachfolgenden Beschreibung bevorzugter Ausführungsformen der Erfindung sowie aus den Zeichnungen. Diese zeigen in jeweils schematischer Blockschaltbild-Darstellung in
Figur 1 und als gedanklicher Ausgangspunkt einen Antriebsregelkreis mit einem Motormodell und nach geschaltetem, erfindungsgemäßen Nachführregler, wobei zum besseren Verständnis der Erfindung das Maschinenmodell noch die nachteiligen direkten zeitlichen Ableitungen von Strömen enthält;
Figur 2 einen Antriebsregelkreis mit erfindungsgemäß ausgebildeten Motormodell und entsprechend angepassten Nachführregler.

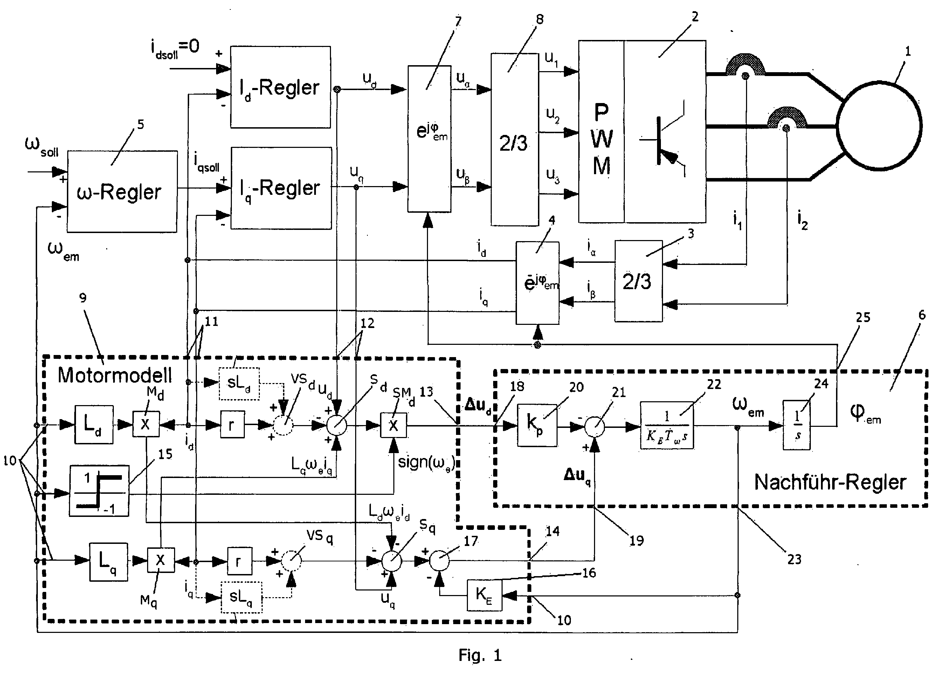

Gemäß Figur 1 ist der Stator 1 einer bürstenlosen elektrischen Maschine, beispielsweise eines Synchronmotors mit Permanentmagnet-Läufer, von einem auf der Basis von Pulsweitenmodulation (PWM) arbeitenden Umrichter 2 mit einem dreiphasigen Drehstrom betrieben. Für eine Stromregelung werden vom Stator die beiden Phasenströme i₁, i₂ abgegriffen bzw. gemessen, welche in einer 3-zu-2 Phasen-Transformationseinheit 3 auf ein statorbezogenes, orthogonales α, β-Koordinatensystem abgebildet werden. Im Zuge der Transformation werden zwei den Statorstrom repräsentierende α, β Vektorkomponenten i_{α}, i_{β} erzeugt und an eine zweite, nachgeordnete Koordinaten-Transformationseinheit 4 ausgegeben. Diese ist dazu ausgebildet, eine Koordinatentransformation vom statorbezogenen α,β-Koordinatensystem zum rotorbezogenen d,q-Koordinatensystem mit der Ausgabe der Strom-Längs- und Quervektorkomponenten i_{d}, iq vorzunehmen. Die Längs- und Quervektorkomponenten i_{d}, iq vom Statorstrom werden als Istwerte den Längsstrom- und Querstromreglern I_{d}, I_{q} zum Soll-/Istwert-Vergleich mit entsprechenden Längs- und Querstrom-Sollwerten i_{dsoll}, i_{qsoll} zugeführt. Wie an sich in der Fachwelt üblich, wird die Längsstrom-Sollwertvorgabe i_{dsoll} auf Null gesetzt, während der Querstromregler die Sollwertvorgabe I_{qsoll} von einem vorgeordneten Geschwindigkeitsregler 5 empfängt. Dieser geht von einem Vergleich eines Drehzahlsollwerts ωₛₒₗₗ mit dem von einem Nachführregler 6 ausgegebenen Schätz- bzw. Ermittlungswert für eine elektrische Drehzahl ωₑₘ aus. Aus dem Nachführregler 6 wird ferner ein ermittelter elektrischer Winkel ϕₑₘ ausgegeben und der zweiten Transformationseinheit 4 sowie einer zu dieser komplementären dritten Transformationseinheit 7 zugeführt. Die dritte Transformationseinheit 7 empfängt ferner die von den Stromreglern I_{d}, I_{q} vorgegebenen Längs- und Querspannungs-Vektorkomponenten u_{g}, u_{q} und bildet diese in das statorbezogene α, β-Koordinatensystem mit den vorgegebenen Spannungsvektorkomponenten u_{α}, u_{β} ab. Letztere Spannungsvektorkomponenten werden von einer nachgeordneten, 2-zu-3 Phasen Transformationseinheit 8 empfangen, welche die Spannungsvorgabe in drei dem Drehstromsystem entsprechende Phasen u₁, u₂, u₃ für den nachgeordneten Umrichter 2 umsetzt.

Gemäß Figur 1 ist dem Nachführregler 6 ein Motor-Modellierungsmodul 9 vorgeordnet. Dieses weist Eingangsschnittstellen 10 für die ermittelte Drehzahl ωₑₘ, 11 für die gemessenen und in das d,q-Koordinatensystem abgebildeten Längs- bzw. Querströme i_{d}, iq und 12 für die im d,q-Koordinatensystem vorgegebenen Längs- und Querspannungen u_{d}, u_{q} auf. Ferner weist das Modellierungsmodul 9 eine erste Ausgangsschnittstelle 13 für die Längsspannungsabweichung Δu_{d} und eine zweite Ausgangsschnittstelle 14 für die Querspannungsabweichung Δu_{q} auf.

Gemäß Figur 1 wird die über die Drehzahl-Eingangsschnittstellen 10 dem Motormodell 9 zugeführte, ermittelte Drehzahl ωₑₘ mit mehreren separaten Proportionalgliedern gewichtet, deren Verstärkungen der EMK-Konstante K_{E}, der Motor-Längsinduktivität L_{d} und der Motor-Querinduktivität Lq entsprechen. Ferner wird die eingegebene Drehzahl ωₑₘ noch mit einem Signumsglied 15 gewichtet. Die Ausgänge der Induktivitäts-Proportionalglieder L_{d}, Lq sind jeweils mit einem eigens zugeordneten Multiplizierglied M_{d}, Mq verbunden. Die zweiten Eingänge der Multiplizierglieder M_{d}, Mq sind jeweils mit der entsprechenden der beiden Strom-Eingangsschnittstellen 11 für Längs- bzw. Querstrom i_{d}, iq verbunden. Die jeweiligen Ausgänge der Multiplizierglieder M_{d}, Mq sind Längsspannungs- bzw. Querspannungs-Summiergliedern S_{d}, Sq jeweils mit positivem Vorzeichen zugeführt. Einem jeweils zweiten Eingang der Längs- bzw. Quer-Spannungssummierglieder S_{d}, Sq sind über die Spannungs-Eingangsschnittstellen 12 die Längs- bzw. Querspannungsvorgaben u_{d}, u_{q} auch mit jeweils positivem Vorzeichen zugeführt. Die beiden SpannungsSummierglieder S_{d}, Sq besitzen jeweils noch einen zusätzlichen Negativ-Eingang (mit jeweils negativem Vorzeichen), denen ein jeweiliger Ausgang zweier vorgeordneter Spannungs-Vorsummierglieder VS_{d} bzw. VSq für die Summation von ohmschen und induktiven Längs- bzw. Querspannungs-Zwischenwerten zugeordnet ist, die aus den über die Strom-Eingangsschnittstellen 11 zugeführten Längs- und Querströme erzeugt werden. Zu dieser Erzeugung dienen einerseits je ein Proportionalglied mit der dem ohmschen Motorwiderstand entsprechenden Verstärkung r. Andererseits werden, wie von der Motorphysik gefordert, die induktiven Elemente bzw. die Längs- und Querinduktivität L_{d}, Lq, über jeweilige Differenzierglieder sL_{d} und sLq (s: differenzierender Laplace-Operator) mit in die Berechnung der Spannungszwischenwerte eingebracht. Die Eingänge der jeweiligen Proportionalglieder r und Differenzierglieder sL_{d}, sLq sind dazu mit den jeweiligen Strom-Eingangsschnittstellen 11 verbunden. Die Ausgänge der jeweiligen Proportionalglieder r und der jeweiligen Differenzierglieder sL_{d} bzw. sLq sind dann mit den jeweiligen Eingängen positiven Vorzeichens der Vorsummierglieder VS_{d}, VSq verbunden.

Gemäß Figur 1 ist das Signumsglied 15 eingangsseitig mit der Drehzahl-Eingangsschnittstelle 10 und ausgangsseitig mit dem ersten Eingang eines Vorzeichen-Multipliziergliedes SM_{d} verbunden. Dessen zweiter Eingang kommuniziert mit dem Ausgang des Längsspannungs-Summiergliedes S_{d}, und der Ausgang des Vorzeichen-Multipliziergliedes SM_{d} steht mit der ersten Ausgangsschnittstelle 13 für die Längsvektorkomponente Δu_{d} der Spannungsabweichung in Verbindung. Dadurch lässt sich die Richtung des Läufers der elektrischen Maschine in die Berechnung des Lageermittlungsfehlers mit einbeziehen.

Gemäß Figur 1 fließt bei der Berechnung des Geschwindigkeitsermittlungsfehlers in Form der Quervektorkomponente Δu_{q} der Spannungsabweichung noch die EMK-Motorkonstante über ein mit entsprechender Verstärkung dimensioniertes Proportionalglied 16 mit ein. Das EMK-Proportionalglied ist dazu eingangsseitig mit der Drehzahl-Eingangsschnittstelle 10 verbunden. Ausgangsseitig ist das EMK-Proportionalglied 16 mit dem Minus-Eingang eines EMK-Summierglieds 17 verbunden, dessen Plus-Eingang mit dem Ausgang des Querspannungs-Summierglieds Sq kommuniziert. Der Ausgang des EMK-Summierglieds 17 geht direkt auf die zweite bzw. Querspannungsabweichungs-Ausgangsschnittstelle 14 des Modellierungsmoduls zur Ausgabe des Geschwindigkeitsermittlungsfehlers an den nachgeordneten Nachführregler 6.

Gemäß Figur 1 besitzt der Nachführregler zwei Eingangsschnittstellen 18, 19 für die Längs- und Quervektorkomponenten Δu_{d}, Δu_{q} der im Modellierungsmodul 9 berechneten Spannungsabweichung. Die Längsvektorkomponente entspricht des Lageermittlungsfehlers, und die Quervektorkomponente dem Geschwindigkeitsermittlungsfehler. Die Eingangsschnittstelle 18 für die Längsspannungsabweichung Δu_{d} ist direkt einem Proportionalglied 20 zugeführt, welches mit der Proportionalverstärkung kp dimensioniert ist und ausgangsseitig mit dem Minus-Eingang eines ersten Nachführ-Summierglieds 21 verbunden ist. Dessen Plus-Eingang ist intern im Nachführ-Regler 6 direkt mit der Eingangsschnittstelle für die Querspannungsabweichung Δu_{q} verbunden. Das Summierergebnis wird ausgangsseitig einem ersten Integrationsglied 22 zugeführt, das erfindungsgemäß ohne Proportionalanteil ausgeführt und auf der Basis der EMK-Konstante K_{E} und einer Zeitkonstante T_{ω} bemessen ist. An dessen Ausgang entsteht per Integration der Differenz der Längs- und Querspannungsabweichung über die Zeit die ermittelte Antriebs-Winkelgeschwindigkeit bzw. Drehzahl ωₑₘ, welche über eine erste Nachführregler-Ausgangsschnittstelle 23 sowohl dem Maschinen-Modellierungsmodul 9 als auch dem Geschwindigkeitsregler 5 gleichsam als Istwert bzw. zum Vergleich mit einem Geschwindigkeitssollwert ωₛₒₗₗ und zur Berechnung eines Vorgabe-Querstromwerts i_{qsoll} zu geführt wird. Ferner wird intern im Nachführregler 6 die ermittelte Antriebsgeschwindigkeit ωₑₘ noch mit einem zweiten Integrationsglied 24 verarbeitet, welches daraus in an sich bekannter Weise die elektrische Antriebs-Lage beziehungsweise Winkellage berechnet und über die zweite Nachführregler-Ausgangsschnittstelle 25 ausgibt. Wie bereits oben angesprochen, dient die elektrische Antriebslage ϕₑₘ, ausgegeben über die zweite Nachführregler-Ausgangsschnittstelle, zur Steuerung bzw. Kontrolle der beiden α,β/d,q bzw. d,q/α,β-Transformationseinheiten 4, 7. Der erfindungsgemäße Nachführregler zeichnet sich bereits allein durch die vereinfachte I-Struktur mit zwei mittelbar aufeinander folgenden Integriergliedern 22, 24 aus.

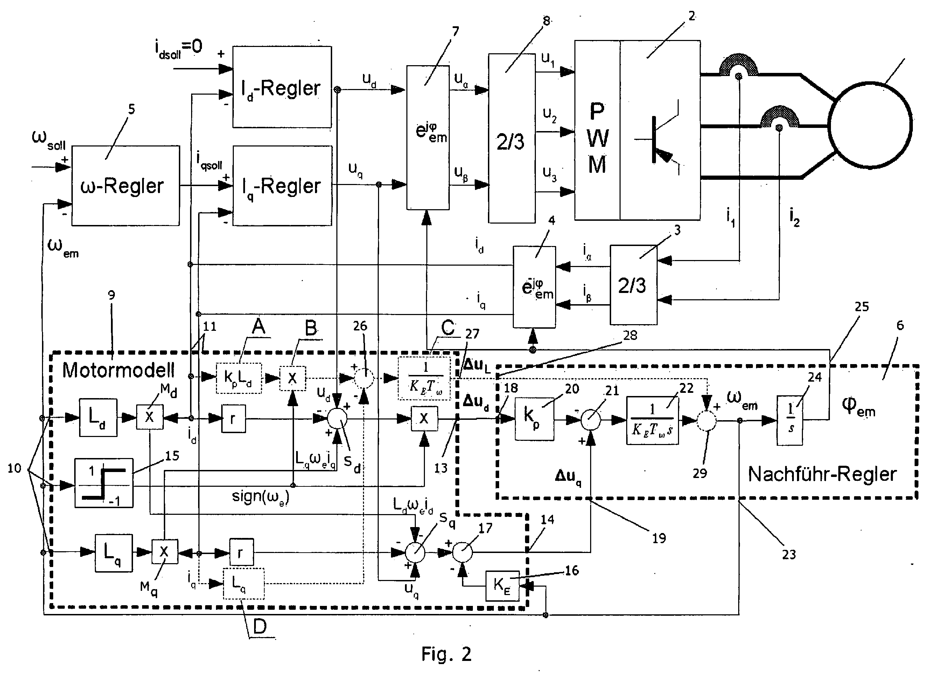

In Figur 2 ist ein gegenüber Figur 1 modifiziertes Steuerungs- bzw. Antriebsregelungssystem dargestellt. Die Modifikationen manifestieren sich vor allem in den mit A-D gekennzeichneten Blöcken des Modellierungsmoduls 9 und einer dritten Eingangsschnittstelle 28 des Nachführreglers 6.

Gemäß Figur 2 sind im Vergleich zur Modellierungsanordnung nach Figur 1 die dortigen Induktivitäts-Differenzierglieder sL_{d}, sLq ersetzt durch Induktivitätsproportionalglieder A, D mit der Längs- bzw. Querinduktivität L_{d}, Lq als jeweiliger Verstärkungsfaktor. Dem Induktivitätsproportionalglied A kann noch in Reihenschaltung ein weiteres Proportionalglied entsprechend dem oben im Zusammenhang mit dem Nachführ-Regler 6 genannten Proportionalglied 20 (interpretierbar als "Lageregulierungsglied") vor- oder nachgeschaltet sein. Dem Ausgang des für die Längsvektorkomponente zuständigen Induktivitäts-Proportionalgliedes A ist ein Multiplizierglied B nachgeordnet, dessen zweiter Eingang mit dem Ausgang des bereits genannten Signumsglieds 15 verbunden ist, wodurch die Richtung der Läuferdrehung oder -Linearbewegung mit einbezogen wird. Der Ausgang des Multipliziergliedes A ist auf den Plus-Eingang eines Induktivitäts-Summiergliedes 26 geführt, dessen zweiter Eingang, verknüpft mit negativem Vorzeichen, mit dem Ausgang des für die Querstromkomponente zuständigen Induktivitäts-Proportionalgliedes D verbunden ist. Der sich am Ausgang des Induktivitäts-Summiergliedes 26 ergebende Differenzwert wird noch mit einem zugeordneten Proportionalglied C gewichtet, das ausgangsseitig mit der dritten Ausgangsschnittstelle 27 für die Induktivitätsspannungsabweichung Δu_{L} verbunden und entsprechend der maschinenspezifischen EMK-Konstante K_{E} und der Zeitkonstante T_{ω} dimensioniert ist.

Gemäß Figur 2 wird der an der dritten Ausgangsschnittstelle 27 bzw. am Ausgang des Proportionalgliedes C ausgegebene Wert für die Induktivitäts-Spannungsabweichung Δu_{L} der dritten Eingangsschnittstelle 28 des Nachführreglers 6 eingegeben. Intern wird die Spannungsabweichung Δu_{L} im Nachführ-Regler einem zweiten Nachführ-Summierglied 29 mit positivem Vorzeichen zugeführt. Dem zweiten Eingang des zweiten Nachführ-Summierglieds 29 ist der Ausgang des ersten Integrationsglieds 22 ebenfalls mit positivem Vorzeichen zugeordnet. Der Ausgang des zweiten Nachführ-Summierglieds 29 steht direkt mit der ersten Nachführregler-Ausgangsschnittstelle 23 zur Rückkopplung der ermittelten Antriebs-Geschwindigkeit ωₑₘ sowie mit dem Eingang des zweiten Integrationsgliedes 24 zur Ermittlung und Ausgabe der Antriebslage ϕₑₘ an die zweite und dritte Koordinaten-Transformationseinheit 4, 7 in Verbindung.

Den beiden Ausführungsbeispielen gemäß Figuren 1 und 2 ist gemeinsam, dass die Lage- und Geschwindigkeitsermittlung "sensorisch" allein über Messungen der Statorströme I₁, I₂ erfolgt.

### Bezugszeichenliste

- 1: Stator
- 2: Umrichter
- 3: 3-zu-2 Phasen-Transformationseinheit
- 4: zweite Koordinaten-Transformationseinheit
- i_{α}, i_{β}: Stromkomponenten im statorbezogenen α, β-Koordinatensystem
- i_{dsoll}, i_{qsoll}: Längs- bzw. Querstromsollwert
- I_{d}, I_{q}: Längs- und Querstromregler
- 5: Geschwindigkeitsregler
- 6: Nachführregler
- ωₛₒₗₗ: Drehzahlsollwert
- ωₑₘ: ermittelte elektrische Drehzahl
- ϕₑₘ: ermittelte elektrische Winkellage
- 7: dritter Koordinaten-Transformationseinheit
- u_{d}, u_{q}: Längs- bzw. Querspannungsvorgaben
- u_{α}, u_{β}: Spannungsvorgabe im α, β-Koordinatensystem (statorbezogen)
- 8: 2-zu-3 Phasen-Transformationseinheit
- u₁, u₂, u₃: Spannungsvorgabe für drei Phasen
- 9: Motor-Modellierungsmodul
- 10: Drehzahl-Eingangsschnittstellen
- 11: Strom-Eingangsschnittstellen
- 12: Spannungs-Eingangsschnittstelle
- 13, 14: erste und zweite Ausgangsschnittstelle für intern berechnete Spannungsabweichungs-Vektorkomponenten
- K_{E}: EMK-Konstante
- 15: Signumsglied
- M_{d}, M_{q}: Multiplizierglieder
- S_{d}, S_{q}: Spannungssummierglieder
- VS_{d}, VS_{q}: Vorsummierglieder
- r: Proportionalglied für Motorwiderstand
- sL_{d}, sL_{q}: Längs-, Querstrom-Differenzierglied
- SM_{d}: Vorzeichen-Multiplizierglied
- Δu_{d}: Längsvektorkomponente
- Δu_{q}: Quervektorkomponente
- 16: EMK-Proportionalglied
- 17: EMK-Summierglied
- 18, 19: Eingangsschnittstellen für Längs- und Querspannungsabweichung
- 20: Proportionalglied
- 21: erstes Nachführ-Summierglied
- 22: erstes Integrationsglied
- 23: erste Nachführregler-Ausgangsschnittstelle
- 24: zweites Integrationsglied
- 25: zweite Nachführregler-Ausgangsschnittstelle
- A,D: Induktivitäts-Proportionalglieder
- B: Multiplizierglied
- 26: Induktivitäts-Summierglied
- C: Proportionalglied
- 27: dritte Ausgangsschnittstelle
- 28: dritte Eingangsschnittstelle
- 29: zweites Nachführ-Summierglied

## Patentansprüche

1. Verfahren zur Ermittlung der elektrischen Antriebs-Geschwindigkeit (ωₑₘ) und -Lage (ϕₑₘ) eines Permanentmagnet-Läufers einer elektrischen bürstenlosen Linear- oder Rotations-Maschine insbesondere für einen Antriebsregelkreis, unter Verwendung mehrphasiger Strommessungen an der Maschine, deren Messwerte (iᵢ,i₂) in Abhängigkeit von der ermittelten Lage (ϕₑₘ) in ein läuferbezogenes d,q-Koordinatensystem zu einer Längsstrom-Vektorkomponente (i_{d}) und einer Querstrom-Vektorkomponente (iq) transformiert werden, und die Längs- und Quervektorkomponenten vom Strom (i_{d},i_{q}) und einer vorgegebenen Spannung (u_{d},u_{q}) zusammen mit der ermittelten Geschwindigkeit (ωₑₘ) als Eingangsvariable einem mathematischen Maschinenmodell (9) zugeführt werden, und das Maschinenmodell (9) eine erste Ausgangsvariable (Δu_{d}) und eine zweite Ausgangsvariable (Δu_{q}) generiert, wobei die erste Ausgangsvariable (Δu_{d}) im d,q-Koordinatensystem der d- beziehungsweise Längsvektorkomponente sowie einem Lageermittlungsfehler und die zweite Ausgangsvariable (Δu_{q}) im d,q-Koordinatensystem der q- beziehungsweise Quervektorkomponente sowie einem Geschwindigkeitsermittlungsfehler entsprechen, und die beiden Ausgangsvariablen (Δu_{d}, Δu_{q}) einem Nachführregler (6) zur Ermittlung und Ausgabe der Lage (ϕₑₘ) und/oder Geschwindigkeit (ωₑₘ) zugeführt werden, **dadurch gekennzeichnet, dass** aus dem Maschinenmodell eine dritte Ausgangsvariable (Δu_{L}) berechnet wird, indem
a) die Längs- und die Quervektorkomponenten vom Strom(i_{d},i_{q}) mit einer Längs- beziehungsweise Querinduktivität (L_{d},L_{q}) der Maschine jeweils gewichtet werden,
b) und die dritte Ausgangsvariable (Δu_{L}) aus der Differenz der beiden Wichtungsergebnisse gebildet wird,
wobei die dritte Ausgangsvariable (Δu_{L}) dem Nachführregler (6) zur Verarbeitung für die Ermittlung der Lage (ϕₑₘ) und Geschwindigkeit (ωₑₘ) zugeführt wird.

2. Verfahren nach Anspruch 1, **dadurch gekennzeichnet, dass** die mit der Längsinduktivität (L_{d}) gewichtete Strom-Längskomponente (i_{d}) mit dem Vorzeichen beziehungsweise der Richtung der ermittelten Geschwindigkeit (ωₑₘ) beeinflusst wird.

3. Verfahren nach Anspruch 1 oder 2, **dadurch gekennzeichnet, dass** im Maschinenmodell (9) die aus den beiden Wichtungsergebnissen gebildete Differenz von einer maschinenspezifischen EMK-Konstante (K_{E}) und/oder von einer Zeitkonstante (T_{ω}) beeinflusst wird.

4. Verfahren nach Anspruch 3, **dadurch gekennzeichnet, dass** im Maschinenmodell (9) die Differenz durch die EMK-Konstante (K_{E}) und/oder die Zeitkonstante (T_{ω}) dividiert wird, und im Nachführregler (6) die selbe EMK-Konstante (K_{E}) und/oder die selbe Zeitkonstante (T_{ω}) als Parameter für die Integration einer Differenz verwendet werden, die aus dem gegebenenfalls proportional (kₚ) verstärkten Lageermittlungsfehler (Δu_{d}) und des Geschwindigkeitsermittlungsfehlers (Δu_{q}) gebildet wird.

5. Verfahren nach einem der vorangehenden Ansprüche, **dadurch gekennzeichnet, dass** im Nachführregler (6) die diesem zugeführte dritte Ausgangsvariable (Δu_{L}) mit dem Ergebnis einer Integration (22) einer Differenz (21) summiert oder sonst verknüpft wird, welche aus dem gegebenenfalls proportional (kₚ) verstärkten Lageermittlungsfehler (Δu_{d}) und des Geschwindigkeitsermittlungsfehlers (Δu_{q}) gebildet wird, und das Verknüpfungsergebnis als ermittelte Geschwindigkeit (ωₑₘ) verwendet und/oder ausgegeben wird.

6. Verfahren nach Anspruch 5, **dadurch gekennzeichnet, dass** die Differenz (21) im Nachführregler (6) gebildet und/oder einer Integration (22) ohne Proportionalanteil unterworfen wird.

7. Verfahren nach einem der vorangehenden Ansprüche, **dadurch gekennzeichnet, dass** im Maschinenmodell (9) die Strom-Längsvektorkomponente (i_{d}) mit einem Proportionalfaktor (kp) gewichtet wird, der im Nachführregler (6) zur Regulierung des Lageermittlungsfehler (Δu_{d}) verwendet wird.

8. Einrichtung zur Ermittlung der elektrischen Antriebs-Lage (ϕₑₘ) und -Geschwindigkeit (ωₑₘ) eines Permanentmagnet-Läufers einer elektrischen bürstenlosen Linear- oder Rotations-Maschine, insbesondere für einen Antriebsregelkreis, geeignet zur Durchführung des Ermittlungs-Verfahrens nach einem der vorangehenden Ansprüche, mit folgenden Funktionskomponenten:
a) mit einem schaltungs- und/oder programmtechnisch realisierten Maschinen-Modellierungsmodul (9), das aufweist:
aa) Eingangs-Schnittstellen (10,11,12) für in ein läuferbezogenes d,q-Koordinatensystem transformierte Maschinen-Längs- und - Quervektorkomponenten (i_{d},i_{q};u_{d},u_{q}) vom Stator-Strom (i₁,i₂) und
einer vorgegebenen Spannung sowie für die ermittelte Geschwindigkeit (ωₑₘ),
ab) und wenigstens zwei Ausgangs-Schnittstellen (13,14) für in das d,q-Koordinatensystem transformierte Vektorkomponenten (Δu_{d}, Δu_{q}) einer intern berechneten Spannungsabweichung,
b) mit einem schaltungs- und/oder programmtechnisch zur Ausgabe der Lage und/oder Geschwindigkeit realisierten Nachführregler (6), der verbunden ist:
ba) eingangsseitig mit den wenigstens beiden Ausgangschnittstellen (13,14) des Modellierungsmoduls (9)
bb) und ausgangsseitig mit der Geschwindigkeits-Eingangs-Schnittstelle (10) des Modellierungsmoduls (9),
**dadurch gekennzeichnet, dass**
das Maschinen-Modellierungsmodul (9) wenigstens noch eine dritte Ausgangsschnittstelle (27) für eine Induktivitäts-Spannungsabweichung (Δu_{L}) aufweist und dazu ausgebildet ist, mittels Proportionalglieder (A,D) die Eingangswerte für die Strom-Längs- und Quervektorkomponenten (i_{d},i_{q}) mit Festwerten für eine Längs- beziehungsweise Querinduktivität (L_{d},L_{q}) des Stators (1) oder der Maschine zu bewerten, mittels eines Induktivitäts-Summierglieds (26) die Differenz aus den induktiv bewerteten Eingangswerten zu bilden und diese über die dritte Ausgangsschnittstelle (27) auszugeben, mit der der Nachführregler (6) eingangsseitig zum Empfang der Differenz verbunden und dazu ausgebildet ist, die Differenz zur Ermittlung der Geschwindigkeit (ωₑₘ) zu verarbeiten und letztere an die Geschwindigkeits-Eingangs-Schnittstelle (10) des Modellierungsmoduls (9) auszugeben.

9. Ermittlungseinrichtung nach Anspruch 8, **dadurch gekennzeichnet, dass** im Maschinenmodell (9) die Eingangsschnittstelle (11) für die Strom-Längsvektorkomponente (i_{d}) einem Proportionalglied (A) mit einer Proportionalverstärkung (kp) zugeführt ist, und im Nachführregler (6) ein Proportionalglied (20) mit der selben oder ähnlichen Proportionalverstärkung (kₚ) angeordnet ist zur Gewichtung des Lageermittlungsfehlers (Δu_{d}).

10. Ermittlungseinrichtung nach Anspruch 9, **dadurch gekennzeichnet, dass** im Maschinenmodell das Proportionalglied mit der Proportionalverstärkung (kp) in Reihenschaltung mit einem entsprechend dem Längsinduktivitäts-Festwert (L_{d}) dimensionierten Induktivitäts-Proportionalglied (A) angeordnet ist.

11. Ermittlungseinrichtung nach Anspruch 8, 9 oder 10, **dadurch gekennzeichnet, dass** der Ausgang des Induktivitäts-Summierglieds (26) mit der dritten Ausgangsschnittstelle (27) über ein Proportionalglied (C) verbunden ist, das entsprechend einer EMK-Konstante (K_{E}) und/oder einer Zeitkonstante (T_{ω}) dimensioniert ist, und im Nachführregler (6) zur dortigen Verarbeitung einer gegebenenfalls gewichteten oder sonst bearbeiteten Kombination der d,q-Vektorkomponenten (Δu_{d}, Δu_{q}) der vom vorgeordneten Modellierungsmodul (9) zugeführten Spannungsabweichung ein erstes Integrationsglied (22) angeordnet ist, das entsprechend der selben oder ähnlichen EMK-Konstante (K_{E}) und/oder Zeitkonstante (T_{ω}) eingestellt ist.

12. Maschinen-Modellierungsmodul für eine elektrische bürstenlosen Linear- oder Rotations-Maschine mit Permanentmagnet-Läufer, geeignet zum Einsatz in der Ermittlungseinrichtung nach Anspruch 8 oder 9, mit
a) Eingangs-Schnittstellen (11) für in ein läuferbezogenes d,q-Koordinatensystem transformierte Maschinen-Längs- und - Quervektorkomponenten (i_{d},i_{q} u_{d},u_{q;}) vom Strom und einer vorgegebenen Spannung sowie für eine extern ermittelte Maschinen-Geschwindigkeit (ωₑₘ),
b) und mit mindestens zwei Ausgangs-Schnittstellen (13,14) für in das d,q-Koordinatensystem transformierte Längs- und Quervektorkomponenten (Δu_{d}, Δu_{q}) einer intern berechneten Spannungsabweichung,
c) und mit mehreren Proportionalgliedern (r,A,D) zur Gewichtung der Strom-Vektorkomponenten (id,iq) mit einem ohmschen Stator- oder Maschinenwiderstand (r) und einer oder mehreren Stator- oder Maschineninduktivitäten (L_{d,}L_{q}),
**gekennzeichnet durch**
wenigstens noch eine dritte Ausgangsschnittstelle (27) für eine Induktivitäts-Spannungsabweichung (Δu_{L}), zu deren Erzeugung ein Längs- und ein Querinduktivitäts-Proportionalglied (A,D) mit Verstärkungen entsprechend einer Längs- beziehungsweise Querinduktivität (L_{d},L_{q}) angeordnet und eingangseitig mit den Eingangs-Schnittstellen (11) für die Strom-Längs- und Quervektorkomponenten (i_{d},i_{q}) verbunden sind, und die beiden Proportionalglied-Ausgänge mit den Eingängen eines Induktivitäts-Summierglieds (26) direkt oder indirekt gekoppelt sind, und der Ausgang des Induktivitäts-Summierglieds (26) unmittelbar oder mittelbar mit der dritten Ausgangsschnittstelle ( 27) gekoppelt ist.

13. Maschinen-Modellierungsmodul nach Anspruch 12, **gekennzeichnet durch** ein Vorzeichen- beziehungsweise Signumsglied (15), das an seinem Eingang mit der Eingangs-Schnittstelle (10) für die extern ermittelte Maschinen-Geschwindigkeit (ωₑₘ) verbunden und ausgangsseitig über ein Multiplizierglied (B) mit dem Ausgang eines Proportionalgliedes (A,D) verknüpft ist, das die Strom-Längs- oder Quervektorkomponente (i_{d}, i_{q}) mit der Längs- oder Querinduktivität (L_{d},L_{q}) gewichtet.

14. Maschinen-Modellierungsmodul nach Anspruch 12 oder 13, **dadurch gekennzeichnet, dass** der Ausgang des Induktivitäts-Summierglieds (26) über ein Proportionalglied (C), dessen Proportionalverstärkung über Festwerte für eine maschinenspezifische EMK-Konstante (K_{E}) und/oder Zeitkonstante (T_{ω}) bestimmt ist, der dritten Ausgangsschnittstelle (27) zugeführt ist.

15. Nachführregler (6) zur Durchführung des Verfahrens oder zum Einsatz in der Ermittlungseinrichtung nach einem der vorangehenden Ansprüche, mit folgenden Merkmalen:
a) mit wenigstens zwei Eingangs-Schnittstellen (18,19) für in das d,q-Koordinatensystem transformierte Längs- und Quervektorkomponenten (Δu_{d}, Δu_{q}) einer extern berechneten und zugeführten Spannungsabweichung,
b) mit mindestens einer Ausgangsschnittstelle (23) für eine intern ermittelte Antriebs-Geschwindigkeit (ωₑₘ),
c) mit einem Proportionalglied (20,kp), dessen Eingang mit der Eingangsschnittstelle (18) für die Längsvektorkomponente (Δu_{d}) der extern berechneten Spannungsabweichung beziehungsweise Lageermittlungsfehler (Δu) verbunden ist,
d) mit einem ersten Nachführ-Summierglied (21), dessen erster Eingang mit dem Ausgang des Proportionalglieds (20,kₚ), und dessen zweiter Eingang über die zweite Eingangsschnittstelle (19) mit der Quervektorkomponente (Δu_{q}) der Spannungsabweichung beziehungsweise des Geschwindigkeitsermittlungsfehlers verbunden ist,
**gekennzeichnet durch**
wenigstens noch eine dritte Eingangsschnittstelle (28) für eine von extern zugeführte Induktivitäts-Spannungsabweichung (Δu_{L}), wobei die dritte Eingangsschnittstelle (28) mit dem ersten Eingang eines Verknüpfungsglieds verbunden ist, dessen zweiter Eingang den Ausgang des ersten Nachführ-Summierglieds (21) mittel- oder unmittelbar erfasst, und dessen Ausgang über die mindestens eine Ausgangsschnittstelle (23) für die Antriebs-Geschwindigkeit (ωₑₘ) abgreifbar ist.

16. Nachführregler nach Anspruch 15, **dadurch gekennzeichnet, dass** das Verknüpfungsglied als dem ersten Nachführ-Summierglied (21) mittel- oder unmittelbar nachgeordnetes, zweites Nachführ-Summierglied (29) ausgebildet ist.

17. Nachführregler nach Anspruch 15 oder 16, **dadurch gekennzeichnet, dass** dem ersten Nachführ-Summierglied (21) und dem Verknüpfungs- oder zweiten Nachführ-Summierglied (29) einzig ein Integrationsglied (22) zwischengeordnet ist.

18. Nachführregler nach Anspruch 17, **dadurch gekennzeichnet, dass** das Integrationsglied (22) ohne Proportionalanteil und/oder auf der Basis der EMK-Konstante (K_{E}) und/oder Zeitkonstante (T_{ω}) dimensioniert ist.

## Claims

1. Method of determining the electrical drive speed (ωₑₘ) and drive position (φₑₘ) of a permanent magnet rotor of a brushless electric linear or rotary machine in particular for a drive control circuit, using multiphase current measurements of the machine, whose measured values (i₁, i₂) are transformed as a function of the position determined (φₑₘ) into a rotor-specific d,q-coordinate system to a longitudinal current vector component (i_{d}) and a transverse current vector component (i_{q}), and the longitudinal and transverse vector components from the current (i_{d}, iq) and a predetermined voltage (u_{d}, u_{q}) are supplied together with the determined speed (ωₑₘ) as an input variable to a mathematical machine model (9), and the machine model (9) generates a first output variable (Δn_{d}) and a second output variable (Δu_{q}), wherein the first output variable (Δu_{d}) in the d,q-coordinate system corresponds to the d- or longitudinal vector component and to a position determination error, and the second output variable (Δu_{q}) in the d,q-coordinate system corresponds to the q- or transverse vector component and to a speed determination error, and the two output variables (Δu_{d}, Δu_{q}) are supplied to a compensating control (6) for determining and outputting the position (φₑₘ) and/or speed (ωₑₘ), **characterised in that** from the machine model a third output variable (Δu_{L}) is computed **in that**
a) the longitudinal and the transverse vector components from the current (i_{d}, i_{q}) are each weighted with a series and a shunt inductance (L_{d}, L_{q}) respectively of the machine,
b) and the third output variable (Δu_{L}) is formed from the differential between the two weighting results,
wherein the third output variable (Δu_{L}) is supplied to the compensating control (6) for processing in order to determine the position (φₑₘ) and speed (ωₑₘ).

2. Method according to claim 1, **characterised in that** the current longitudinal component (i_{d}) weighted with the series inductance (L_{d}) is influenced with the polarity sign or direction of the speed (ωₑₘ) determined.

3. Method according to claim 1 or 2, **characterised in that** in the machine model (9) the differential obtained from the two weighting results is influenced by a machine-specific electromotive force (emf) constant (K_{E}) and/or a time constant (T_{ω}).

4. Method according to claim 3, **characterised in that** in the machine model (9) the differential is divided by the emf-constant (K_{E}) and/or the time constant (T_{ω}) and in the compensating control (6) the same emf-constant (K_{E}) and/or the same time constant (T_{ω}) are used as parameters for the integration of a differential which is obtained from the optionally proportionally (kₚ) amplified position determination error (Δu_{d}) and of the speed determination error (Δu_{q}).

5. Method according to one of the preceding claims, **characterised in that** in the compensating control (6) the third output variable (Δu_{L}) supplied thereto is integrated or is otherwise linked to the result of an integration (22) of a differential (21) which is obtained from the optionally proportionally (kₚ) amplified position determination error (Δu_{d}) and of the speed determination error (Δu_{q}), and the result of the link is used and/or output as the speed (ωₑₘ) determined.

6. Method according to claim 5, **characterised in that** the differential (21) is formed in the compensating control (6) and/or is subjected to integration (22) without a proportional component.

7. Method according to one of the preceding claims, **characterised in that** in the machine model (9) the current longitudinal vector component (i_{d}) is weighted with a proportional factor (kₚ) which is used in the compensating control (6) to regulate the position determination error (Δu_{d}).

8. Device for determining the electrical drive position (Δₑₘ) and drive speed (ωₑₘ) of a permanent magnet rotor of a brushless electric linear or rotary machine, in particular for a drive control circuit, suitable for carrying out the determination method according to one of the preceding claims, having the following functional components:
a) a machine modelling module (9) realised with switching and/or program technology and having:
aa) input interfaces (10, 11, 12) for machine longitudinal and transverse vector components (i_{d}, i_{q}; u_{d}, u_{q}), transformed into a rotor-specific d,q-coordinate system, from the stator current (i₁, i₂) and a predetermined voltage transformed into a rotor-specific d, q-coordinate system and for the speed (ωₑₘ) determined,
ab) and at least two output interfaces (13, 14) for vector components (Δu_{d}, Δu_{q}), of an internally computed voltage deviation, transformed into the d, q-coordinate system ,
b) with a compensating control (6) realised with switching and/or program technology for outputting the position and/or speed, which control is connected:
ba) on the input side to the at least two output interfaces (13, 14) of the modelling module (9)
bb) and on the output side to the speed input interface (10) of the modelling module (9),
**characterised in that** the machine modelling module (9) has at least one further third output interface (27) for an inductance voltage deviation (Δu_{L}) and is formed for the purpose of evaluating by means of proportional members (A, D) the input values for the current longitudinal and transverse vector components (i_{d}, iq) with fixed values for a series or shunt inductance (L_{d}, Lq) respectively of the stator (1) or of the machine, and for forming by means of an inductance integrating member (26) the differential from the inductively evaluated input values and outputting this via the third output interface (27), to which the compensating control (6) is connected on the input side for receiving the differential and is formed for the purpose of processing the differential in order to determine the speed (ωₑₘ) and outputting the latter to the speed input interface (10) of the modelling module (9).

9. Determining device according to claim 8, **characterised in that** in the machine model (9) the input interface (11) for the current longitudinal vector component (i_{d}) is supplied to a proportional member (A) with a proportional amplification (kₚ), and in the compensating control (6) is disposed a proportional member (20) with the same or similar proportional amplification (kp) for weighting of the position determination error (Au_{d}).

10. Determining device according to claim 9, **characterised in that** in the machine model the proportional member with the proportional amplification (kp) is arranged connected in series with an inductance proportional member (A) dimensioned according to the series inductance fixed value (L_{d}).

11. Determining device according to claim 8, 9, or 10, **characterised in that** the output of the inductance integration member (26) is connected to the third output interface (27) via a proportional member (C), which is dimensioned according to an emf-constant (K_{E}) and/or a time constant (T_{ω}), and in the compensating control (6) for processing therein of an optionally weighted or otherwise treated combination of the d, q-vector components (Δu_{d}, Δu_{q}) of the voltage deviation supplied from the upstream modelling module (9), a first integration member (22) is disposed, which is set according to the same or a similar emf-constant (K_{E}) and/or time constant ((T_{ω}).

12. Machine modelling module for a brushless electric linear or rotary machine with permanent magnet rotor, suitable for use in the determining device according to claim 8 or 9, having
a) input interfaces (11) for a machine longitudinal and transverse vector component (i_{d}, i_{q}, u_{d}, u_{q}), transformed into a rotor-specific d-q-coordinate system, from the current and a predetermined voltage and for an externally determined machine speed (ωₑₘ),
b) and having at least two output interfaces (13, 14) for longitudinal and transverse vector components (Δu_{d}, Δu_{q}), of an internally computed voltage deviation, transformed into the d, q-coordinate system,
c) and having plural proportional members (r, A, D) for weighting the current vector components (i_{d}, i_{q}) with an ohmic stator resistance or machine resistance (r) and one or more stator or machine inductances (L_{d}, L_{q}),
**characterised by** at least one further third output interface (27) for an inductance voltage deviation (Δu_{L}), for generating which a series and shunt inductance proportional member (A, D) is provided, having amplifications according to a series or shunt inductance (L_{d}, L_{q}) respectively and being connected on the input side to the input interfaces (11) for the current longitudinal and transverse vector components (i_{d}, i_{q}), and the two proportional member outputs are directly or indirectly coupled to the inputs of an inductance integration member (26), and the output of the inductance integration member (26) is coupled directly or indirectly to the third output interface (27).

13. Machine modelling module according to claim 12, **characterised by** a polarity sign or signum member (15), which is connected at its input to the input interface (10) for the externally determined machine speed (ωₑₘ) and on the output side is linked via a multiplying member (B) to the output of a proportional member (A, D), which weights the current longitudinal or transverse vector component (i_{d}, i_{q}) with the series or shunt inductance (L_{d}, L_{q}).

14. Machine modelling module according to claim 12 or 13, **characterised in that** the output of the inductance integration member (26) is supplied via a proportional member (C), whose proportional amplification is determined via fixed values for a machine-specific emf-constant (K_{E}) and/or time constant (T_{ω}), to the third output interface (27).

15. Compensating control (6) for carrying out the method or for use in the determining device according to one of the preceding claims, having the following features:
a) having at least two input interfaces (18, 19) for longitudinal and transverse vector components (Δu_{d}, Δu_{q}), of an externally computed and supplied voltage deviation, transformed into the d, q-coordinate system,
b) having at least one output interface (23) for an internally determined drive speed (ωₑₘ),
c) having a proportional member (20, kₚ) whose input is connected to the input interface (18) for the longitudinal vector component (Δu_{d}) of the externally computed voltage deviation or position determination error (Δu) respectively,
d) having a first compensating integration member (21), whose first input is connected to the output of the proportional member (20, kₚ) and whose second input is connected via the second input interface (19) to the transverse vector component (Δu_{q}) of the voltage deviation or of the speed determination error respectively,
**characterised by** at least one further third input interface (28) for an inductance voltage deviation (Δu_{L}) supplied externally, wherein the third input interface (28) is connected to the first input of a linking member whose second input indirectly or directly detects the output of the first compensating integration member (21), and whose output is measurable via the at least one output interface (23) for the drive speed (ωₑₘ).

16. Compensating control according to claim 15, **characterised in that** the linking member is formed as a second compensating integration member (29) arranged indirectly or directly downstream of the first compensating integration member (21).

17. Compensating control according to claim 15 or 16, **characterised in that** solely one integration member (22) is interposed between the first compensating integration member (21) and the linking or second compensating integration member (29).

18. Compensating control according to claim 17, **characterised in that** the integration member (22) is dimensioned without a proportional component and/or on the basis of the emf-constant (K_{E}) and/or time constant (T_{ω}).

## Revendications

1. Procédé de détermination de la vitesse (ωₑₘ) et de la position (ϕₑₘ) d'entraînement électrique d'un rotor à aimant permanent d'une machine électrique linéaire ou rotative sans balais, en particulier pour un circuit de régulation d'entraînement, en utilisant des mesures de courant polyphasées sur la machine, dont les valeurs mesurées (i₁, i₂) sont transformées, en fonction de la position (ϕₑₘ) déterminée, en un système de coordonnées d, q, rapporté au rotor pour générer une composante vectorielle longitudinale de courant (i_{d}) et une composante vectorielle transversale de courant (i_{q}), et les composantes vectorielles longitudinale et transversale du courant (i_{d}, i_{q}) et d'une tension (U_{d}, U_{q}) prédéterminée, conjointement avec la vitesse (ωₑₘ) déterminée, sont transmises en tant que variable d'entrée à un modèle mathématique (9) de la machine, et le modèle (9) de la machine génère une première variable de sortie (ΔU_{d}) et une deuxième variable de sortie (ΔU_{q}), la première variable de sortie (ΔU_{d}) correspondant, dans le système de coordonnées d, q, à la composante vectorielle d ou longitudinale ainsi qu'à une erreur de détermination de position et la deuxième variable de sortie (ΔU_{q}) correspondant, dans le système de coordonnées d, q, à la composante vectorielle q ou transversale ainsi qu'à une erreur de détermination de la vitesse, les deux variables de sortie (ΔU_{d}, Δu_{q}) étant transmises à un régulateur de poursuite (6) pour détermination et sortie de la position (ϕₑₘ) et/ou de la vitesse (ωₑₘ), **caractérisé en ce qu'**à partir du modèle de la machine est calculée une troisième variable de sortie (ΔU_{L})
a) en pondérant respectivement les composantes vectorielles longitudinale et transversale du courant (i_{d}, i_{q}) avec une inductance longitudinale ou transversale (L_{d}, L_{q}) de la machine,
b) et en formant la troisième variable de sortie (ΔU_{L}) à partir de la différence des deux résultats de pondération,
la troisième variable de sortie (ΔU_{L}) étant transmise au régulateur de poursuite (6) à des fins de traitement pour détermination de la position (ϕₑₘ) et de la vitesse (ωₑₘ).

2. Procédé selon la revendication 1, **caractérisé en ce que** la composante longitudinale de courant (i_{d}), pondérée avec l'inductance longitudinale (L_{d}) est influencée par le signe ou la direction de la vitesse déterminée (ωₑₘ).

3. Procédé selon la revendication 1 ou 2, **caractérisé en ce que**, dans le modèle (9) de la machine, la différence formée à partir des deux résultats de pondération est influencée par une constante EMK (K_{E}) spécifique à la machine et/ou par une constante de temps (T_{ω}).

4. Procédé selon la revendication 3, **caractérisé en ce que**, dans le modèle (9) de la machine, la différence est divisée par la constante EMK (K_{E}) et/ou la constante de temps (T_{ω}), et **en ce que** dans le régulateur de poursuite (6), la même constante EMK (K_{E}) et/ou la même constante de temps (T_{ω}) sont utilisées comme paramètres pour l'intégration d'une différence qui est formée à partir de l'erreur de détermination de position (ΔU_{d}), amplifiée le cas échéant de manière proportionnelle (Kₚ), et de l'erreur de détermination de vitesse (ΔU_{q}).

5. Procédé selon l'une des revendications précédentes, **caractérisé en ce que**, dans le régulateur de poursuite (6), la troisième variable de sortie (ΔU_{L}) transmise à celui-ci est additionnée ou autrement combinée avec le résultat d'une intégration (22) d'une différence (21) qui est formée à partir de l'erreur de détermination de position (ΔU_{d}), amplifiée le cas échéant de manière proportionnelle (Kₚ), et de l'erreur de détermination de vitesse (ΔU_{q}), et **en ce que** le résultat de la combinaison est utilisé et/ou sorti en tant que vitesse déterminée (ωₑₘ).

6. Procédé selon la revendication 5, **caractérisé en ce que** la différence (21) est formée dans le régulateur de poursuite (6) et/ou est soumise à une intégration (22) sans composante proportionnelle.

7. Procédé selon l'une des revendications précédentes, **caractérisé en ce que**, dans le modèle (9) de la machine, la composante vectorielle longitudinale (i_{d}) du courant est pondérée avec un facteur proportionnel (Kₚ) qui est utilisé dans le régulateur de poursuite (6) pour régulation de l'erreur de détermination de position (ΔU_{d}).

8. Dispositif de détermination de la position (ϕₑₘ) et de la vitesse (ωₑₘ) d'entraînement électrique d'un rotor à aimant permanent d'une machine électrique linéaire ou rotative sans balais, en particulier pour un circuit de régulation d'entraînement, apte à réaliser le procédé de détermination selon l'une des revendications précédentes, comprenant les composants fonctionnels suivants :
a) un module de modélisation (9) de la machine, réalisé selon la technique des circuits et/ou de la programmation, qui présente :
aa) des interfaces d'entrée (10, 11, 12) pour des composantes vectorielles machine longitudinale et transversale (i_{d}, i_{q} ,U_{d}, U_{q}) du courant de stator (i₁, i₂) et d'une tension prédéterminée, transformées en un système de coordonnées d, q rapporté au rotor, ainsi que pour la vitesse (ωₑₘ) déterminée,
ab) et au moins deux interfaces de sortie (13, 14) pour des composantes vectorielles (ΔU_{d}, ΔU_{q}), transformées en système de coordonnées d, q, d'un écart de tension calculé de manière interne,
b) un régulateur de poursuite (6) réalisé selon la technique des circuits et/ou de programmation pour sortir la position et/ou la vitesse, qui est relié :
ba) côté entrée aux interfaces de sortie (13, 14), au moins au nombre de deux, du module de modélisation (9),
bb) et côté sortie à l'interface d'entrée de vitesse (10) du module de modélisation (9),
**caractérisé en ce que**
le module de modélisation (9) de la machine présente au moins encore une troisième interface de sortie (27) pour un écart de tension d'inductance (ΔU_{L}) et est conçu pour évaluer, au moyen d'éléments à action proportionnelle (A, D), les valeurs d'entrée des composantes vectorielles longitudinale et transversale (i_{d}, i_{q} ) du courant avec des valeurs établies d'une inductance longitudinale ou transversale (L_{d}, L_{q}) du stator (1) ou de la machine, pour former, au moyen d'un élément sommateur d'inductance (26), la différence à partir des valeurs d'entrée évaluées de manière inductive, et sortir cette différence via la troisième interface de sortie (27), avec laquelle le régulateur de poursuite (6) est relié côté entrée pour recevoir la différence et est conçu pour traiter la différence à des fins de détermination de la vitesse (ωₑₘ) et pour sortir cette dernière au niveau de l'interface d'entrée de vitesse (10) du module de modélisation (9).

9. Dispositif de détermination selon la revendication 8, **caractérisé en ce que**, dans le modèle (9) de la machine, l'interface d'entrée (11) pour la composante vectorielle longitudinale (i_{d}) du courant est transmise à un élément à action proportionnelle (A) avec une amplification proportionnelle (kₚ), et **en ce qu'**est disposé dans le régulateur de poursuite (6) un élément à action proportionnelle (20) ayant la même amplification proportionnelle (kₚ) ou une amplification similaire pour pondération de l'erreur de détermination de position (ΔU_{d}).

10. Dispositif de détermination selon la revendication 9, **caractérisé en ce que**, dans le modèle de la machine, l'élément à action proportionnelle ayant l'amplification proportionnelle (kₚ) est monté en série avec un élément à action proportionnelle d'inductance (A) dimensionné conformément à la valeur établie d'inductance longitudinale (L_{d}).

11. Dispositif de détermination selon la revendication 8, 9 ou 10, **caractérisé en ce que** la sortie de l'élément sommateur d'inductance (26) est reliée à la troisième interface de sortie (27) via un élément à action proportionnelle (C) dimensionné conformément à une constante EMK (K_{E}) et/ou à une constante de temps (T_{ω}), et **en ce que**, dans le régulateur de poursuite (6), en vue du traitement dans celui-ci d'une combinaison, éventuellement pondérée ou autrement traitée, des composantes vectorielles d, q (ΔU_{d}, ΔU_{q}) de l'écart de tension transmis au module de modélisation (9) placé en amont, est disposé un premier circuit d'intégration (22) qui est réglé conformément à la même constante EMK (K_{E}) et/ou constante de temps (T_{ω}) ou à une constante EMK et/ou de temps similaire(s).

12. Module de modélisation de machine pour une machine électrique linéaire ou rotative sans balais équipée d'un rotor à aimant permanent, apte à être utilisé dans le dispositif de détermination selon la revendication 8 ou 9, comprenant
a) des interfaces d'entrée (11) pour des composantes vectorielles machine longitudinale et transversale (i_{d}, i_{q} ,U_{d}, U_{q}) du courant et d'une tension prédéterminée, transformées en un système de coordonnées d, q rapporté au rotor, ainsi que pour une vitesse (ωₑₘ) de la machine, déterminée de manière externe,
b) et au moins deux interfaces de sortie (13, 14) pour des composantes vectorielles (ΔU_{d}, ΔU_{q}) longitudinale et transversale, transformées en système de coordonnées d, q, d'un écart de tension calculé de manière interne,
c) et plusieurs éléments à action proportionnelle (r, A, D) pour pondération des composantes vectorielles de courant (i_{d}, i_{q}) avec une résistance ohmique de stator ou de machine (r) et une ou plusieurs inductances de stator ou de machine (L_{d}, Lq),
**caractérisé par**
au moins encore une troisième interface de sortie (27) pour un écart de tension d'inductance (ΔU_{L}), pour la génération duquel un élément à action proportionnelle d'inductance longitudinale et un élément à action proportionnelle d'inductance transversale (A, D) avec des amplifications conformément à une inductance longitudinale ou transversale (L_{d}, L_{q}) sont disposés et reliés, côté entrée, aux interfaces d'entrée (11) des composantes vectorielles longitudinale et transversale de courant (i_{d}, i_{q}), les deux sorties des éléments à action proportionnelle étant couplées directement ou indirectement aux entrées d'un élément sommateur d'inductance (26), et la sortie de l'élément sommateur d'inductance (26) étant couplée directement ou indirectement à la troisième interface de sortie (27).

13. Module de modélisation de machine selon la revendication 12, **caractérisé par** un élément de signe (15) qui, à son entrée, est relié à l'interface d'entrée (10) de la vitesse machine (ωₑₘ) déterminée de manière externe et, côté sortie, est combiné, via un élément multiplicateur (B), avec la sortie d'un élément à action proportionnelle (A, D) qui pondère les composantes vectorielles longitudinale ou transversale de courant (i_{d}, iq) avec l'inductance longitudinale ou transversale (L_{d}, L_{q}).

14. Module de modélisation de machine selon la revendication 12 ou 13, **caractérisé en ce que** la sortie de l'élément sommateur d'inductance (26) est transmis à la troisième interface de sortie (27) par l'intermédiaire d'un élément à action proportionnelle (C) dont l'amplification proportionnelle est définie via des valeurs établies d'une constante EMK (K_{E}) et/ou d'une constante de temps (T_{ω}) spécifiques à la machine.

15. Régulateur de poursuite (6) pour réalisation du procédé ou pour utilisation dans le dispositif de détermination selon l'une des revendications précédentes, comportant les caractéristiques suivantes :
a) au moins deux interfaces d'entrée (18, 19) pour des composantes vectorielles longitudinale et transversale (ΔU_{d}, ΔU_{q}), transformées en système de coordonnées d, q, d'un écart de tension calculé de manière externe et transmis,
b) au moins une interface de sortie (23) pour une vitesse d'entraînement (ωₑₘ) déterminée de manière interne,
c) un élément à action proportionnelle (20, kₚ) dont l'entrée est reliée à l'interface d'entrée (18) de la composante vectorielle longitudinale (ΔU_{d}) de l'écart de tension ou de l'erreur de détermination de position (ΔU) calculé(e) de manière externe,
d) un premier élément sommateur de poursuite (21) dont la première entrée est reliée à la sortie de l'élément à action proportionnelle (20, kₚ) et dont la deuxième entrée est reliée, via la deuxième interface d'entrée (19), à la composante vectorielle transversale (ΔU_{q}) de l'écart de tension ou de l'erreur de détermination de vitesse,
**caractérisé par**
au moins encore une troisième interface d'entrée (28) pour un écart de tension d'inductance (ΔU_{L}) transmis de manière externe, la troisième interface d'entrée (28) étant reliée à la première entrée d'un élément de combinaison dont la seconde entrée détecte indirectement ou directement la sortie du premier élément sommateur de poursuite (21) et dont la sortie peut être prélevée par l'intermédiaire de l'interface de sortie (23), au moins au nombre de une, pour la vitesse d'entraînement (Δₑₘ).

16. Régulateur de poursuite selon la revendication 15, **caractérisé en ce que** l'élément de combinaison est conçu en tant que deuxième élément sommateur de poursuite (29) placé indirectement ou directement en aval du premier élément sommateur de poursuite (21).

17. Régulateur de poursuite selon la revendication 15 ou 16, **caractérisé en ce qu'**un seul élément d'intégration (22) est interposé entre le premier élément sommateur de poursuite (21) et l'élément de combinaison ou deuxième élément sommateur de poursuite (29).

18. Régulateur de poursuite selon la revendication 17, **caractérisé en ce que** l'élément d'intégration (22) est dimensionné sans composante proportionnelle et/ou sur la base de la constante EMK (K_{E}) et/ou de la constante de temps (T_{ω}).
